# EUROPÄISCHE PATENTSCHRIFT

(11) **EP 3 375 054 B1**
(45) Veröffentlichungstag und Bekanntmachung des Hinweises auf die Patenterteilung: **25.09.2019**
(21) Anmeldenummer: 16801140.1
(22) Anmeldetag: 31.10.2016
(51) Int. Cl.: H01R 43/02, B23K 20/10, B23K 37/04, B23K 20/22, B23K 37/047

(54) **ULTRASCHALLSCHWEISSVORRICHTUNG**
ULTRASONIC WELDING APPARATUS
DISPOSITIF DE SOUDAGE PAR ULTRASONS

(30) Priorität: 09.11.2015 DE 102015222013
(43) Veröffentlichungstag der Anmeldung: 19.09.2018
(73) Patentinhaber: Schunk Sonosystems GmbH, 35435 Wettenberg (DE)
(72) Erfinder: SCHMIDT, Reiner, 35457 Lollar (DE); MÜLLER, Stefan, 35580 Wetzlar (DE); WERNER, Waldemar, 35447 Reiskirchen (DE); WAGNER, Peter, 35435 Wettenberg (DE); WAGENBACH, Rainer, 35799 Merenberg (DE); FEY, Manuel, 35585 Blasbach (DE)
(74) Vertreter: advotec.
(86) Internationale Anmeldenummer: PCT/EP2016/076232
(87) Internationale Veröffentlichungsnummer: WO 2017/080863

(56) Entgegenhaltungen:
- WO-A1-2006/005509
- CN-U- 204 565 413
- DE-A1- 19 540 860
- DE-B3-102013 222 938
- US-A- 4 826 067
- US-A- 5 452 838

## Beschreibung

Die vorliegende Erfindung betrifft eine Ultraschallschweißvorrichtung zum Verschweißen von stabförmigen, mit einer äußeren isolierenden Umhüllung versehenen elektrischen Leitern, die von der Umhüllung befreite Blankbereiche aufweisen, umfassend einen Verdichtungsraum zur Aufnahme der miteinander zu verbindenden Blankbereiche, und eine Positionierungseinrichtung zur Relativpositionierung der Blankbereiche, wobei die Positionierungseinrichtung zwei Anschlagelemente aufweist, die jeweils eine Anschlagfläche zur axialen Positionierung eines Blankbereichs aufweisen, derart, dass zur Ausbildung eines Schweißknotens zwischen den Blankbereichen eine Überdeckung mit einer Überdeckungslänge l ausgebildet ist.

Aus der DE 10 2013 222 938 B3 ist eine Vorrichtung der eingangs genannten Art bekannt, bei der die Positionierungseinrichtung am Verdichtungsraum ausgebildet ist, sodass die Positionierung der miteinander zu kontaktierenden Blankbereiche der Leiter innerhalb des Verdichtungsraums erfolgt. Darüber hinaus erfolgt bei der bekannten Positionierungseinrichtung eine mittelbare Positionierung der Blankbereiche, da die zur Ausbildung der Positionierungseinrichtung eingesetzten Anschlagelemente Anschlagkanten aufweisen, gegen die die Leiter mit einer den Blankbereich von der isolierenden Umhüllung abgrenzenden axialen Umhüllungsendfläche positioniert werden.

Aufgrund der Positionierung der Blankbereiche im Verdichtungsraum erfolgt die Positionierung unter beengten Raumverhältnissen. Darüber hinaus erfolgt der positionierende Kontakt zwischen den Leitern und den Anschlagelementen lediglich im Bereich der nur eine geringe Wandstärke aufweisenden, umhüllenden Isolierung, sodass die exakte Positionierung der Leiter eine entsprechende Fingerfertigkeit der Bedienperson voraussetzt.

Der vorliegenden Erfindung liegt die Aufgabe zugrunde, eine Ultraschallvorrichtung zum Verschweißen elektrischer Leiter vorzuschlagen, die mit einer Positionierungseinrichtung versehen ist, welche eine exakte Positionierung der Leiter im Verdichtungsraum vereinfacht.

Zur Lösung dieser Aufgabe weist die erfindungsgemäße Vorrichtung die Merkmale des Anspruchs 1 auf.

Erfindungsgemäß ist die Positionierungseinrichtung abseits des Verdichtungsraums angeordnet und mit einer Transfereinrichtung versehen, die eine Aufnahmeeinrichtung zur fixierten Aufnahme der mittels der Positionierungseinrichtung axial positionierten Blankbereiche außerhalb des Verdichtungsraums aufweist, und die Transfereinrichtung dient zur Überführung der in der Aufnahmeeinrichtung in einer Aufnahmeposition fixierten Leiter in die Schweißposition im Verdichtungsraum.

Die erfindungsgemäße Vorrichtung ermöglicht somit eine Handhabung zur Positionierung der elektrischen Leiter außerhalb des Verdichtungsraums, ohne dass die engen Raumverhältnisse im Verdichtungsraum die Handhabung erschweren könnten.

Gemäß einer vorteilhaften Ausführungsform sind die Anschlagflächen der Anschlagelemente in einem Positionierungsabstand voneinander angeordnet, derart, dass zwischen Endquerschnitten der Blankbereiche der in der Aufnahmeeinrichtung fixierten Leiter ein lichter Abstand ausgebildet ist, und die Transfervorrichtung mit einer axialen Zustelleinrichtung versehen ist, die zur Kombination einer axialen Zustellbewegung der Leiter mit einer Transferbewegung zur Überführung der Leiter in den Verdichtungsraum dient, derart, dass zusätzlich zu der Transferbewegung der Leiter in den Verdichtungsraum mittels der Zustelleinrichtung eine axiale Zustellbewegung der Leiter zur Ausbildung der Überdeckung zwischen den Blankbereichen der Leiter erfolgt.

Mit dieser besonderen Ausführungsform wird die Möglichkeit geschaffen, die Positionierung der Leiter außerhalb des Verdichtungsraums in einer besonders einfachen und sicheren Art und Weise vorzunehmen, da die Leiter außerhalb des Verdichtungsraums mit ihren Endquerschnitten gegen die Anschlagelemente positioniert werden können, ohne dass die Gefahr besteht, dass aufgrund einer zu kleinen Kontaktfläche zwischen den Anschlagelementen und den Leitern eine Positionierung ohne erhebliches Geschick in der Handhabung der Leiterenden kaum durchführbar ist.

Aufgrund der Kombination der Transferbewegung und der Zustellbewegung ergibt sich im Verdichtungsraum die für die Herstellung des Schweißknotens erforderliche Überdeckung der Blankbereiche ohne Einwirkung einer Bedienperson auf die axiale Positionierung. Vielmehr erfolgt die Positionierung im Verdichtungsraum allein aufgrund der Ausführung der Transferbewegung mittels der Transeinrichtung.

Obwohl es grundsätzlich möglich ist, dass die Zustellbewegung und die Transferbewegung einander nachfolgend ausgeführt werden können, ist es besonders vorteilhaft, wenn die Zustelleinrichtung derart ausgebildet ist, dass die axiale Zustellbewegung während der Transferbewegung der Leiter in den Verdichtungsraum erfolgt, sodass die Zustelleinrichtung besonders kompakt ausgebildet sein kann.

Wenn die Transfervorrichtung zwei jeweils zumindest einem Leiter zugeordnete Schwenkarme aufweist, die an ihrem freien Ende zur Ausbildung der Aufnahmeeinrichtung lösbare Klemmeinrichtungen aufweisen und mit ihrem anderen Ende auf einem Schwenkzapfen eines Schwenklagers angeordnet sind, wobei zur Ausbildung der Zustelleinrichtung der Schwenkzapfen als eine in einer Spindelmutter geführte Gewindespindel ausgebildet ist, kann in besonders einfacher Art und Weise eine Überdeckung zwischen den miteinander zu kontaktierenden Blankbereichen ausgehend von einer voneinander beabstandeten Positionierung der Blankbereiche außerhalb des Verbindungsraums allein aufgrund einer einfachen Schwenkbewegung der Schwenkarme erfolgen.

Vorzugsweise sind die Gewindespindeln mit gegenläufigen Gewinden ausgebildet, wobei es besonders bevorzugt ist, wenn die Gewindespindeln ein Steilgewinde aufweisen.

Vorzugsweise erfolgt die Ausführung der Schwenkbewegung manuell, um die Anordnung weiterer Aktuatoren oder dergleichen im Umfeld des Verdichtungsraums zu vermeiden.

Gemäß einer besonders bevorzugten Ausführungsform ist die Klemmeinrichtung derart an den Schwenkarmen angeordnet, dass in der Aufnahmeposition der Schwenkarme zur Aufnahme der Leiter in der Klemmeinrichtung eine Klemmenöffnung nach oben weist, sodass zur Positionierung der Leiter außerhalb des Verdichtungsraums die Leiter durch die Bedienperson komfortabel von oben in die Klemmeinrichtung eingelegt werden können, anschließend eine Betätigung der Klemmeinrichtung zur Fixierung der Leiter erfolgt und nach dem Verschwenken der Schwenkarme zur Anordnung der Leiter im Verdichtungsraum die Klemmung gelöst werden kann und die Leiterenden aus der Klemmeinrichtung freigegeben werden.

Hieraus ergibt sich der besondere Vorteil, dass die Leiter während der Ultraschallbeaufschlagung der Blankbereiche zur Ausbildung des Schweißknotens nicht mehr in der Klemmeinrichtung gehalten werden, sodass Beeinträchtigungen der Leiteroberfläche, insbesondere der Isolierung der Leiter, durch die Ultraschallbeaufschlagung ausgeschlossen werden.

Nachfolgend wird eine bevorzugte Ausführungsform der Ultraschallschweißvorrichtung anhand der Zeichnung näher erläutert.

Es zeigen:
- **Fig. 1**: eine Aufsicht auf den Arbeitstisch einer Ultraschallschweißvorrichtung mit einer Verdichtungsraumanordnung und einer Transfereinrichtung in Aufnahmeposition;
- **Fig. 2**: einen in der in **Fig. 1** dargestellten Verdichtungsraumanordnung ausgebildeten Verdichtungsraum mit zwei in Schweißposition angeordneten Leitern;
- **Fig. 3**: den in **Fig. 1** dargestellten Verdichtungsraum in Schließstellung;
- **Fig. 4**: einen Transfervorgang von einer Aufnahmeposition in eine Schweißposition;
- **Fig. 5**: die in Schweißposition im Verdichtungsraum angeordneten Leiter.

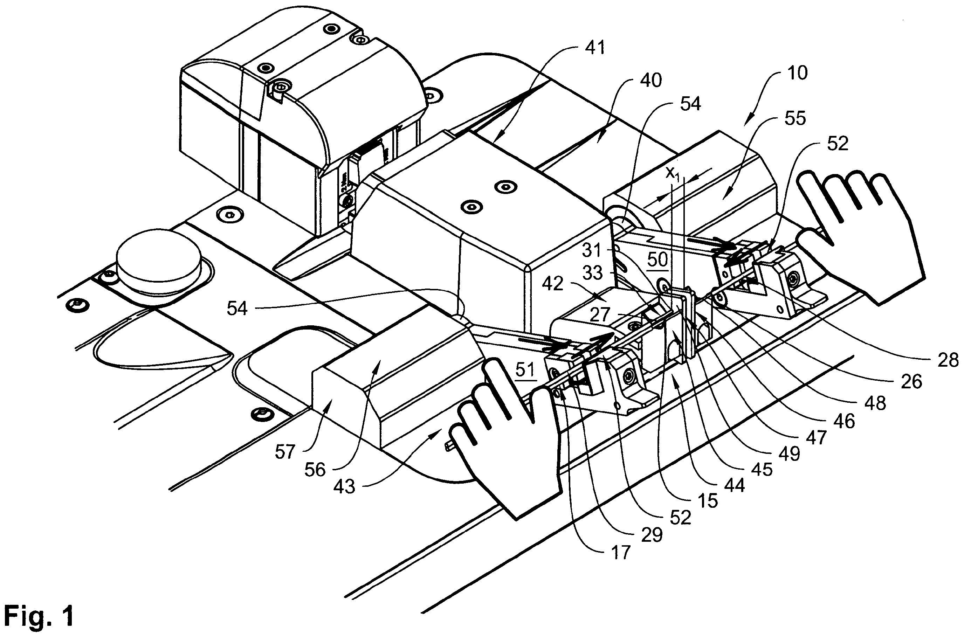

**Fig. 1** zeigt einen Arbeitstisch 40 einer Ultraschallschweißvorrichtung 10 mit einer Verdichtungsraumanordnung 41 und einer abseits der Verdichtungsraumanordnung 41 angeordneten Positionierungseinrichtung 42.

Wie **Fig. 1** zeigt, weist die Positionierungseinrichtung 42 eine Anschlagflächenanordnung 44 mit einer Anschlagaufnahme 45 zur axial zueinander verstellbaren Anordnung von Anschlagelementen 46, 47 auf, derart, dass Anschlagflächen 48, 49 der Anschlagelemente 46, 47 in einem definierten axialen Abstand x₁ voneinander arretierbar sind. Wie in **Fig. 1** dargestellt, ermöglicht die Positioniereinrichtung 42, dass in einer Aufnahmeposition von einer Bedienperson Verbindungsbereiche 17, 26, 27 von Leitern 17, 28, 29 derart in Aufnahmeeinrichtungen 52 eingelegt werden können, dass abisolierte Blankbereiche 33 der Leiter 17, 28, 29, die die Verbindungsbereiche 15, 26, 27 ausbilden, mit ihren Endquerschnitten 31 gegen die Anschlagflächen 48, 49 in einem lichten Abstand x₁ voneinander positioniert sind.

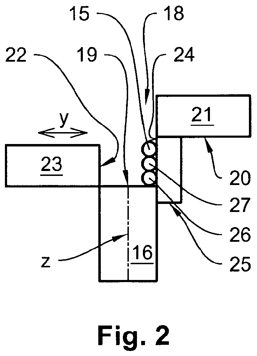

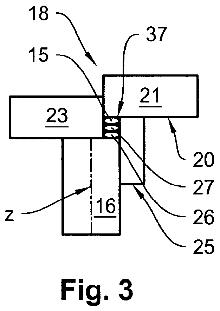

Die wesentlichen Elemente eines in der Verdichtungsraumanordnung 41 ausgebildeten Verdichtungsraums 18 sind in den **Fig. 2** und **3** dargestellt. Der Verdichtungsraum 18 ist in einer ersten Achsenrichtung (z-Achse) an zwei einander gegenüberliegenden Seiten durch eine Arbeitsfläche 19 der Ultraschallschwingungen übertragenden Sonotrode 16 und eine Gegenfläche 20 einer in einer zweiten Achsenrichtung (y-Achse) verfahrbaren Gegenelektrode 21 begrenzt. In der zweiten Achsenrichtung, die in **Fig. 2** durch die y-Achse dargestellt ist, ist der Verdichtungsraum 18 an zwei einander gegenüberliegenden Seiten durch eine Begrenzungsfläche 22 eines in y-Achsenrichtung verfahrbaren Schieberelements 23 und eine Begrenzungsfläche 24 eines ebenso wie die Gegenelektrode 21 in die z-Achsenrichtung verfahrbaren Begrenzungselements 25 begrenzt.

Bei dem in **Fig. 2** dargestellten Verdichtungsraum 18 befinden sich die drei in Stapelanordnung übereinander liegend angeordnete Verbindungsbereiche 15, 26, 27 der in **Fig. 1** dargestellten Leiter 17, 28, 29 auf der Arbeitsfläche 19 der Sonotrode 16, wobei **Fig. 2** die in einer Schweißposition angeordneten Verbindungsbereiche 15, 26, 27 unmittelbar nach dem Einlegen in den geöffneten Verdichtungsraum 18 zeigt.

**Fig. 3** zeigt den Verdichtungsraum 18 in der geschlossenen Konfiguration, in der die den Verdichtungsraum 18 begrenzenden Komponenten, also die Sonotrode 16, die Gegenelektrode 21, das Schieberelement 23 und das Begrenzungselement 25, so gegeneinander verfahren sind, dass der nunmehr in seinem Volumen reduzierte Verdichtungsraum 18 eine Form 37 ausbildet, die bei einer Beaufschlagung der Verbindungsbereiche 15, 26, 27 der Leiter 17, 28, 29 mit mechanischen Schwingungen der Sonotrode 16 in einem Reibschweißvorgang eine Komprimierung und Verbindung der Verbindungsbereiche 15, 26, 27 miteinander zur Ausbildung eines Schweißknotens ermöglicht.

Wie **Fig. 1** weiter zeigt, ist die Positionierungsvorrichtung 42 mit einer Transfervorrichtung 43 versehen, die zwei Schwenkarme 50, 51 aufweist, die jeweils mit einer Aufnahmeeinrichtung 52 versehen sind, wobei die Aufnahmeeinrichtung 52 des Schwenkarms 50 den Leiter 28 und die Aufnahmeeinrichtung 52 des Schwenkarmes 51 die Leiter 17 und 29 aufnimmt. Die Aufnahmeeinrichtungen 52 sind zur Fixierung der Leiter 17, 28, 29 mit lösbaren Klemmeinrichtungen 53 versehen. Nach der Positionierung der Leiter 17, 28, 29 mit den Endquerschnitten 31 der Blankbereiche 33 gegen die Anschlagflächen 48, 49 erfolgt ein Schließen der Klemmeinrichtungen 53, sodass die Leiter 28, 29 in axialer Richtung parallel zueinander angeordnet sind und somit auch in der Schweißposition eine entsprechend parallele Anordnung der Leiter 17, 28, 29 gewährleistet ist.

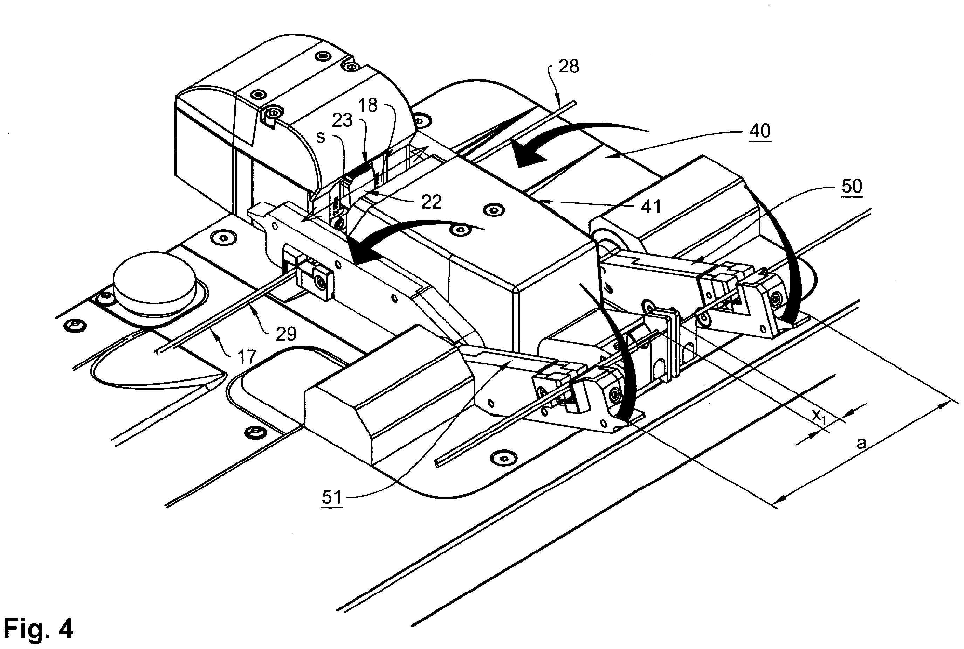

Die Schwenkarme 50, 51 sind jeweils auf einem Schwenkzapfen 54 eines Schwenklagers 55 angeordnet, wobei die Schwenkzapfen 54 als Gewindespindel mit gegenläufigen Gewinden ausgeführt sind, die in einer Spindelmutter 56 geführt ist, sodass die Schwenklager 55 eine Zustelleinrichtung 57 ausbilden, derart, dass, wie in **Fig. 4** dargestellt, die die Schwenkarme 50, 51 sowohl in Aufnahmeposition (durchgezogener Linienverlauf) als auch in Schweißposition (gestrichelter Linienverlauf) zeigt, die Schwenkarme 50, 51 bei einem Verschwenken um die Schwenklager 55 aus der Aufnahmeposition abseits der Verdichtungsraumanordnung 41 in die Schweißposition benachbart zur Verdichtungsraumanordnung 41 ihren axialen Abstand voneinander ändern, derart, dass der Aufnahmeabstand a in der Aufnahmeposition in der Schweißposition auf den Schweißabstand s reduziert wird.

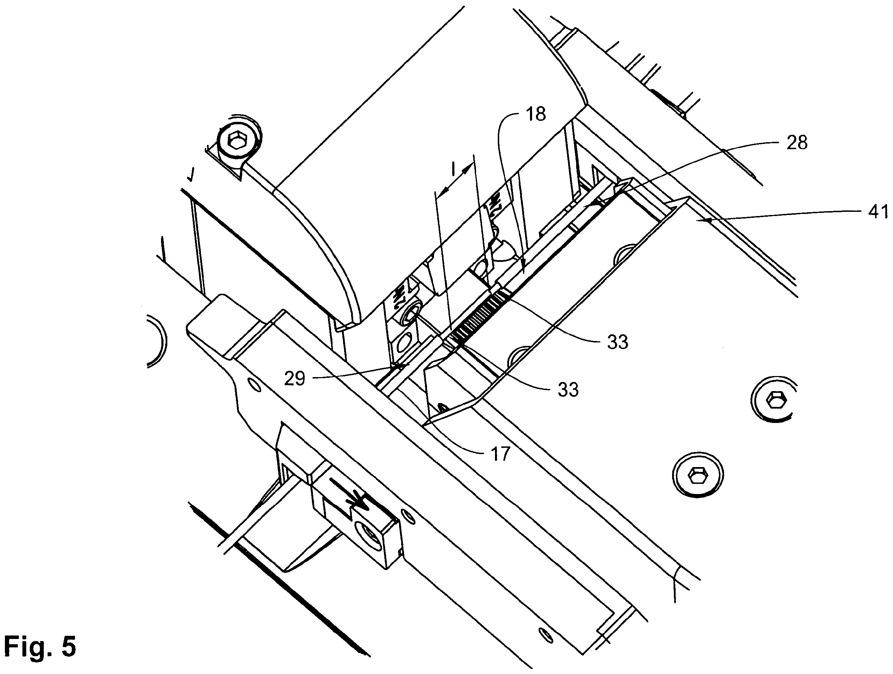

Die vorstehend erläuterte Transferbewegung der Schwenkarme 50, 51 hat zur Folge, dass, wie **Fig. 1** zeigt, die in der Aufnahmeposition von einer Bedienperson in die Aufnahmeeinrichtung 52 eingelegten und mit den Endquerschnitten 31 ihrer Blankbereiche 33 gegen die Anschlagflächen 48, 49 positionierten Leiter 17, 28, 29 in der Aufnahmeposition einen lichten Abstand x₁ voneinander haben und in der Schweißposition, in der die Schwenkarme 50, 51 nur noch den reduzierten Abstand s voneinander aufweisen, wie **Fig. 5** zeigt, eine Überdeckungslage mit einer Überdeckungslänge 1 zwischen den Blankbereichen 33 ausgebildet ist.

Wie **Fig. 4** zeigt, werden die Klemmeinrichtungen 57 nach Überführung der Schwenkarme 50, 51 in die Schweißposition geöffnet, sodass während der Ultraschallschweißung keine Haltekräfte auf die Leiter 17, 28, 29 einwirken.

## Patentansprüche

1. Ultraschallschweißvorrichtung (10) zum Verschweißen von stabförmigen, mit einer äußeren isolierenden Umhüllung versehenen elektrischen Leitern (17, 28, 29), die von der Umhüllung befreite Blankbereiche (33) aufweisen, umfassend eine Verdichtungsraumanordnung (41) mit einem Verdichtungsraum (18) zur Aufnahme von miteinander zu verbindenden Blankbereichen, und eine Positionierungseinrichtung (42) zur Relativpositionierung der Blankbereiche (33), wobei die Positionierungseinrichtung zwei Anschlagelemente (46, 47) aufweist, die jeweils eine Anschlagfläche (48, 49) zur axialen Positionierung eines Blankbereichs (33) aufweisen, derart, dass zur Ausbildung eines Schweißknotens zwischen den Blankbereichen (33) eine Überdeckung mit einer Überdeckungslänge (l) ausgebildet ist,
**dadurch gekennzeichnet,**
**dass** die Positionierungseinrichtung (42) abseits der Verdichtungsraumanordnung (41) angeordnet und mit einer Transfereinrichtung (43) versehen ist, die eine Aufnahmeeinrichtung (52) zur fixierten Aufnahme der mittels der Positionierungseinrichtung (42) axial positionierten Leiter (17, 28, 29) außerhalb des Verdichtungsraums (18) aufweist, und die Transfereinrichtung (43) zur Überführung der in der Aufnahmeeinrichtung (52) in einer Aufnahmeposition fixierten Leiter (17, 28, 29) in die Schweißposition im Verdichtungsraum (18) dient.

2. Vorrichtung nach Anspruch 1,
**dadurch gekennzeichnet,**
**dass** die Anschlagflächen (48, 49) der Anschlagelemente (46, 47) in einem Positionierungsabstand voneinander angeordnet sind, derart, dass zwischen Endquerschnitten (31) der Blankbereiche (33) der in der Aufnahmeeinrichtung (52) fixierten Leiter (17, 28, 29) ein lichter Abstand x₁ ausgebildet ist, und die Transfereinrichtung (43) mit einer axialen Zustelleinrichtung (57) versehen ist, die zur Kombination einer axialen Zustellbewegung der Leiter (28, 29) mit einer Transferbewegung zur Überführung der Leiter (17, 28, 29) in den Verdichtungsraum (18) dient, derart, dass zusätzlich zu der Transferbewegung der Leiter (17, 28, 29) in den Verdichtungsraum (18) mittels der Zustelleinrichtung (57) eine axiale Zustellbewegung der Leiter zur Ausbildung der Überdeckung zwischen den Blankbereichen (31) der Leiter (17, 28, 29) erfolgt.

3. Vorrichtung nach Anspruch 2,
**dadurch gekennzeichnet,**
**dass** die Zustelleinrichtung (57) derart ausgebildet ist, dass die axiale Zustellbewegung während der Transferbewegung der Leiter (17, 28, 29) in den Verdichtungsraum (18) erfolgt .

4. Vorrichtung nach Anspruch 3,
**dadurch gekennzeichnet,**
**dass** die Transfereinrichtung (43) zwei jeweils zumindest einem Leiter (17, 28, 29) zugeordnete Schwenkarme (50, 51) aufweist, die an ihrem freien Ende zur Ausbildung der Aufnahmeeinrichtung (52) lösbare Klemmeinrichtungen (53) aufweisen und mit ihrem anderen Ende auf einem Schwenkzapfen (54) eines Schwenklagers (55) angeordnet sind, wobei zur Ausbildung der Zustelleinrichtung (57) der Schwenkzapfen (54) als eine in einer Spindelmutter (56) geführte Gewindespindel ausgebildet ist.

5. Vorrichtung nach Anspruch 4,
**dadurch gekennzeichnet,**
**dass** die Gewindespindeln mit gegenläufigen Gewinden ausgebildet sind.

6. Vorrichtung nach Anspruch 4 oder 5,
**dadurch gekennzeichnet,**
**dass** die Klemmeinrichtung (53) derart an den Schwenkarmen (50, 51) angeordnet ist, dass in einer Aufnahmeposition der Schwenkarme (50, 51) zur Aufnahme der Leiter (28, 29) in der Klemmeinrichtung (53) eine Klemmenöffnung nach oben weist.

## Claims

1. An ultrasonic welding apparatus (10) for welding rod-shaped electric conductors (17, 28, 29) which are provided with an insulating outer sheath and have bare regions (33) free of the sheath, comprising a compression space arrangement (41) having a compression space (18) for receiving bare regions to be connected to each other, and a positioning device (42) for positioning the bare regions (33) relative to each other, the positioning device having two stop elements (46, 47) which each have a stop surface (48, 49) for axially positioning a bare region (33) in such a manner that the bare regions (33) overlap with an overlap length (1) in order for a weld node to be formed,
**characterized in that**
the positioning device (42) is remote from the compression space arrangement (41) and is provided with a transferring device (43) which has a receiving device (52) for fixedly receiving, outside of the compression space (18), the conductors (17, 28, 29) axially positioned by means of the positioning device (42), and the transferring device (43) serves to transfer the conductors (17, 28, 29) fixed in a receiving position in the receiving device (52) into the welding position within the compression space (18).

2. The device according to claim 1,
**characterized in that**
the stop surfaces (48, 49) of the stop elements (46, 47) are disposed at a positioning distance from each other in such a manner that a clearance x₁ is formed between end cross-sections (31) of the bare regions (33) of the conductors (17, 28, 29) fixed in the receiving device (52), and the transferring device (43) is provided with an axial advancing device (57) which serves to combine an axial advancing movement of the conductors (28, 29) with a transferring movement for transferring the conductors (17, 28, 29) into the compression space (18) in such a manner that in addition to the transferring movement of the conductors (17, 28, 29) into the compression space (18), an axial advancing movement of the conductors is performed by the advancing device (57) so as to make the bare regions (31) of the conductors (17, 28, 29) overlap.

3. The device according to claim 2,
**characterized in that**
the advancing device (57) is configured in such a manner that the axial advancing movement takes place during the transferring movement of the conductors (17, 28, 29) into the compression space (18).

4. The device according to claim 3,
**characterized in that**
the transferring device (43) has two swivel arms (50, 51), each of which is assigned to at least one conductor (17, 28, 29) and has a releasable clamping device (53) at its free end for forming the receiving device (52) and is disposed on a swivel pin (54) of a swivel bearing (55) at its other end, the swivel pin (54) being formed as a threaded spindle guided in a spindle nut (56) so as to form the advancing device (57).

5. The device according to claim 4,
**characterized in that**
the threaded spindles are formed with threads running in opposite directions.

6. The device according to claim 4 or 5,
**characterized in that**
the clamping device (53) is disposed on the swivel arms (50, 51) in such a manner that a clamp opening faces upward when the swivel arms (50, 51) are in a receiving position for receiving the conductors (28, 29) in the clamping device (53).

## Revendications

1. Appareil (10) de soudage par ultrasons pour souder des conducteurs (17, 28, 29) électriques en forme de tige qui sont munis d'un enveloppe extérieur isolant et ont des zones nues (33) exemptes de l'enveloppe, l'appareil comprenant un ensemble (41) d'espace de compression ayant un espace de compression (18) destiné à recevoir des zones nues à relier, et un dispositif de positionnement (42) destiné à positionner les zones nues (33) l'une par rapport à l'autre, le dispositif de positionnement ayant deux éléments de butée (46, 47) qui ont chacun une surface de butée (48, 49) destinée à positionner axialement une zone nue (33) de telle manière que les zones nues (33) chevauchent par une longueur de chevauchement (l) afin qu'un noeud de soudure soit formé,
**caractérisé en ce que**
le dispositif de positionnement (42) est disposé à l'écart de l'ensemble (41) d'espace de compression et est muni d'un dispositif de transfert (43) qui a un dispositif de reçu (52) destiné à recevoir de manière fixe, hors de l'espace de compression (18), les conducteurs (17, 28, 29) axialement positionnés par le dispositif de positionnement (42), et le dispositif de transfert (43) sert à transférer les conducteurs (17, 28, 29) qui sont fixés dans une position de reçu dans le dispositif de reçu (52) à la position de soudage située dans l'espace de compression (18).

2. Dispositif selon la revendication 1,
**caractérisé en ce que**
les surface de butée (48, 49) des éléments de butée (46, 47) sont disposées à une distance de positionnement l'une de l'autre de telle manière qu'un écartement x₁ est formé entre des sections transversales terminales (31) des zones nues (33) des conducteurs (17, 28, 29) fixés dans le dispositif de reçu (52), et le dispositif de transfert (43) est muni d'un dispositif d'avancement axial (57) qui sert à combiner un mouvement d'avancement axial des conducteurs (28, 29) avec un mouvement de transfert pour transférer les conducteurs (17, 28, 29) à l'espace de compression (18) de telle manière qu'en plus du mouvement de transfert des conducteurs (17, 28, 29) à l'espace de compression (18), un mouvement d'avancement axial des conducteurs est effectué par le dispositif d'avancement (57) afin de faire chevaucher les zones nues (31) des conducteurs (17, 28, 29).

3. Dispositif selon la revendication 2,
**caractérisé en ce que**
le dispositif d'avancement (57) est configuré de telle manière que le mouvement d'avancement axial s'effectue pendant le mouvement de transfert des conducteurs (17, 28, 29) à l'espace de compression (18).

4. Dispositif selon la revendication 3,
**caractérisé en ce que**
le dispositif de transfert (43) a deux bras de de pivotement (50, 51), chacun bras de pivotement étant associé à au moins un conducteur (17, 28, 29) et ayant un dispositif de serrage (53) desserrable à son extrémité libre pour réaliser le dispositif de reçu (52) et étant disposé sur une broche de pivotement (54) d'un palier de pivotement (55) à son autre extrémité, la broche de pivotement (54) étant réalisée comme broche filetée guidée dans un écrou de broche (56) pour réaliser le dispositif d'avancement (57).

5. Dispositif selon la revendication 4,
**caractérisé en ce que**
les broches filetées sont munies des filetages des sens contraires.

6. Dispositif selon la revendication 4 ou 5,
**caractérisé en ce que**
le dispositif de serrage (53) est disposé sur les bras de pivotement (50, 51) de telle manière qu'une ouverture de serrage est tournée vers le bas quand les bras de pivotement (50, 51) sont situés dans une position de reçu pour recevoir les conducteurs (28, 29) dans le dispositif de serrage (53).
